# EUROPÄISCHE PATENTSCHRIFT

(11) **EP 0 924 440 B1**
(45) Veröffentlichungstag und Bekanntmachung des Hinweises auf die Patenterteilung: **05.02.2003**
(21) Anmeldenummer: 98118743.8
(22) Anmeldetag: 05.10.1998
(51) Int. Cl.: F16C 9/04, F16C 7/02

(54) **Geschmiedetes Pleuel für Hubkolbenmaschinen aus Kohlenstoffstahl mit bruchgetrenntem Lagerdeckel**
Forged connecting rod of carbon steel for piston engines with breaking separated bearing sap
Bielle forgée en acier au carbone pour moteurs à pistons avec chapeaux de palier séparés par rupture

(30) Priorität: 21.11.1997 DE 19751640
(43) Veröffentlichungstag der Anmeldung: 23.06.1999
(73) Patentinhaber: Bayerische Motoren Werke Aktiengesellschaft, 80788 München (DE)
(72) Erfinder: Mittrach, Jürgen, 81739 München (DE); Luchner, Clemens, 85598 Baldham (DE); Pöllath, Helmut, 82223 Eichenau (DE)

(56) Entgegenhaltungen:
- EP-A- 0 572 246
- WO-A-97/22430
- DE-A- 3 434 759
- DE-U- 29 519 126
- JP-A- 9 003 589
- JP-A- 9 031 594
- JP-A- 9 111 412
- JP-A- 9 176 786
- JP-A- 9 176 787
- US-A- 5 135 587
- US-A- 5 208 979

## Beschreibung

Die Erfindung bezieht sich nach dem Oberbegriff des Patentanspruches 1 auf ein geschmiedetes Pleuel für Hubkolbenmaschinen aus Kohlenstoffstahl mit bruchgetrenntem Lagerdeckel, bei dem zur gezielten Bruchauslösung am großen Pleuelauge für den Lagerdeckel eine Anrißstelle erzeugt ist durch zumindest abschnittsweise entlang einer Seite der Bruchtrennebene von der Bauteiloberfläche aus mittels eines energiereichen Strahls, wie eines Elektronen- oder Laserstrahls angeordneter und mittels querschnittsschwacher Stege voneinander getrennter, insbesondere sacklochartiger Vertiefungen, wobei diese Stege zumindest in ihren freien, bauteiloberflächennahen Endabschnitten mittels temperaturabhängiger Gefügeumwandlungen zu Martensit über ihren Querschnitt durchgängig versprödet sind zur Erzeugung insbesondere von Härterissen als erste Starterrisse zur Bruchauslösung.

Ein derartiges Pleuel ist aus der veröffentlichten internationalen Anmeldung mit der Veröffentlichungsnummer WO 97/22430 bekannt, wobei für dieses bekannte Pleuel als Werkstoff allgemein ein Kohlenstoffstahl mit einem Kohlenstoffgehalt von C etwa 0,5 bis 0,85 % angegeben ist.

Aus dem amerikanischen Patent US 5 135 587 ist ein geschmiedetes Pleuel mit einem im großen Pleuelauge bruchgetrennten Lagerdeckel bekannt, wobei der hierfür angegebene Kohlenstoffstahl an Kohlenstoff C = 0,6 bis 0,75 %, an Mangan Mn = 0,25 bis 0,5 %, an Schwefel S = 0,04 bis 0,12 % enthält und an Verunreinigungen nicht mehr als 1,2 % enthalten soll, wobei das Gefüge dieses Kohlenstoffstahls im wesentlichen zu 100 % aus Perlit gebildet sein soll. An Verunreinigungen sollen jeweils maximal enthalten sein 0,2 % Nickel, 0,02 % Molybdän, 0,1 % Chrom, 0,15 % Kupfer, 0,035 % Vanadium, 0,15 bis 0,35 % Silicium und 0,03 % Phosphor.

Weiter ist in diesem Dokument über den Mangan-Gehalt ausgeführt, daß ein Gehalt an Mangan über 0,5 % die Härtbarkeit steigert, daß es aber schwierig ist, die gewünschte Härte mittels Luftabkühlung nach dem Schmieden zu erzielen.

Der Erfindung liegt die Aufgabe zugrunde, für ein gattungsgemäßes Pleuel zur Erzielung einer prozeßsicheren Härtung der Stegspitzen für eine schnelle und gleichmäßige Brucheinleitung einen niedrig legierten Kohlenstoffstahl aufzuzeigen, wobei dessen Streckgrenze relativ zur Bruchgrenze derart erhöht ist, daß die mit dem Bruchtrennen der Lagerdeckel gegebenen plastischen Verformungen stets in gleichem Umfang gering und damit prozeßsicher sind.

Diese Aufgabe ist mit dem Patentanspruch 1 dadurch gelöst, daß der Kohlenstoffstahl neben Eisen Fe aus Kohlenstoff C = 0,60 bis 0,78 % und Schwefel S = 0,06 bis 0,07 %, sowie als wesentliche Legierungsbestandteile aus Mangan Mn = 0,55 bis 1,0 %, Vanadium V = 0,03 bis 0,20 %, Chrom Cr = 0,10 bis 0,30 % und Stickstoff N = 0,01 bis 0,025 % und Verunreinigungen bzw. Stahlbegleitern wie Silicium Si, Kupfer Cu, Bor B und Phosphor P von insgesamt maximal 0,6 % besteht, wobei das geschmiedete Pleuel durch eine vorbestimmte Abkühlung aus der Schmiedewärme mittels/an der Luft bis unter 600°C ein Gefüge mit 90 bis 95 % Perlit und 10 bis 5 % Ferrit aufweist (alle Prozentangaben in Gewichtsprozent).

Der erfindungsgemäße Mangananteil von 0,55 bis 1,0 % unterstützt in vorteilhafter Weise die Perlit-Bildung und fördert insbesondere die zur Erhöhung der Streckgrenze vorteilhafte Mischkristallhärtung im Perlit und im gesonderten Ferrit-Anteil. Weiter unterstützt der erhöhte Mangan-Gehalt die Martensit-Gefügeausbildung in den querschnittsschwachen Stegen zwischen den sacklochartigen Vertiefungen, womit eine prozeßsichere Härtung der Stegspitzen und damit eine schnellere und gleichmäßigere Brucheinleitung über die gesamte Pleuelbreite erzielt ist. Die weiteren Legierungsbestandteile Vanadium und Stickstoff erhöhen in vorteilhafter Weise die Streckgrenze durch eine Ausscheidungshärtung im Ferrit des Perlit-Gefüges sowie im freien Ferrit-Anteil, so daß mit beiden Maßnahmen zur Steigerung der Streckgrenze die plastische Verformung des Pleuels im großen Lagerauge bei einer Bruchtrennung des Lagerdeckels minimiert ist mit geringer Streuung und somit das Bruchtrennen prozeßsicher ist.

Mit dem erfindungsgemäß niedrig legierten Kohlenstoffstahl ergibt sich in vorteilhafter Weise bei Bruchbelastung ein schnellerer Rißfortschritt im Grundgefüge bei gleichzeitig vorteilhafter Reduzierung der Rißverzweigung durch den insbesondere freien Ferrit-Anteil, der ein Stoppen der Nebenrisse beim Cracken sowie im Motorbetrieb bewirkt und somit ferner in vorteilhafter Weise Ausbrüche an der Bruchtrennfläche bzw. Ausschuppungen und ebenfalls Fehlfügungen oder losgelöste Partikel sicher vermieden sind. Der freie Ferrit-Anteil wird im wesentlichen gemäß dem dritten Kennzeichenmerkmal durch eine vorbestimmte Abkühlung des geschmiedeten Pleuels aus der Schmiedewärme mittels bzw. an der Luft bis unter 600°C erzielt neben dem hauptsächlich vorliegenden Perlit-Gefüge.

Der erfindungsgemäß legierte Kohlenstoffstahl ist bevorzugt bei einem Pleuel verwendet, bei dem die sacklochartigen Vertiefungen mittels des energiereichen Strahles, wie Elektronenstrahls oder Laserstrahls, durch Schmelzen und Verdampfen des Stahls gebildet sind, wobei die Härtung der Stege durch Martensit-Bildung mittels Wärmeentzug aus den Stegen über das angrenzende Pleuelmaterial bewirkt ist.

Mit dem erfindungsgemäß erhöhten Mangan-Anteil ist die Martensit-Bildung in den Stegen bzw. in den Stegspitzen wesentlich gesteigert, wobei der Wärmeentzug aus diesen Stegen bzw. Stegspitzen durch das umgebende kalte Material des Pleuels von Raumtemperatur eine Härtung mit einer solchen Versprödung ergibt, daß in den Stegen bzw. Stegspitzen Härterisse entstehen, die bei Einleitung der Bruchtrennkraft als Starterrrisse für den Bruchtrennvorgang dienen. In Kombination mit der durch erfindungsgemäß eingesetzte Legierungsbestandteile erhöhten Streckgrenze mit vorteilhaft geringerem plastischem Verhalten des großen Pleuelauges beim Bruchtrennen wirkt in der durch Härterisse in den Stegen gebildeten Kerbe eine Bruchtrennkraft mit steilem Kraftanstieg, die in vorteilhafter Weise eine rasche Bruchkraft-Einleitung bewirkt.

Die Erfindung ist anhand eines in der Zeichnung dargestellten Ausführungsbeispiels beschrieben. Es zeigt
- Figur 1: in perspektivischer Ansicht eine Anrißstelle im großen Lagerauge eines Pleuels für eine Hubkolbenmaschine,
- Figur 2: eine ausschnittsweise vergrößerte Schrägaufsicht der Anrißstelle,
- Figur 3: die Anrißstelle ausschnittsweise im Längsschnitt, vergrößert und in
- Figur 4: eine Bearbeitungsvorrichtung für ein Pleuel mit einer fest angeordneten Lasereinrichtung, wobei die Anrißstellen im Pleuel vergrößert im Längsschnitt dargestellt sind.

Ein abschnittsweise dargestelltes geschmiedetes Pleuel 1 für eine nicht gezeigte Hubkolbenmaschine ist aus einem niedrig legierten Kohlenstoffstahl gefertigt. Das Pleuel 1 umfaßt an seinem Schaft 2 ein großes Lagerauge 3 mit Schraubenpfeifen 4. Das Lagerauge 3 ist durch einen Lagerdeckel 5 zweigeteilt.

Die Zweiteilung des Lagerauges 3 erfolgt mittels Bruchtrennen, wofür in einer Bruchtrennebene 6 zur gezielten Bruchauslösung in der Lagerbohrung 7 diametral angeordnete Anrißstellen 8 (nur eine gezeigt) ausgebildet sind:

Vorbekannter Ausgangspunkt der Ausbildung jeder Anriß-Stelle 8 zur gezielten Bruchauslösung ist, daß diese entlang einer Seite der Bruchtrennebene 6 durch von der Bauteiloberfläche 9 aus angeordnete und durch Stege 10 voneinander getrennte Vertiefungen 11 erzeugt ist. Zur Erzeugung erster, für eine qualitative Bruchtrennung bedeutsamer Starterrisse werden die Stege 10 zumindest in ihrem freien, bauteiloberflächennahen Endabschnitten mittels Gefügeumwandlung zu Martensit über ihren Querschnitt durchgängig versprödet. Diese Versprödung kann durch ein bekanntes Härten oder durch eine Wasserstoff- oder Stickstoff-Versprödung erzielt sein.

Bevorzugt beim zumindest bereichsweisen Härten der Stege 10 und/oder der Vertiefungen 11 sind solche Verfahren mit Eigenabschreckung durch Wärmeabfuhr in das umgebende Bauteil. Hierfür ist erfindungsgemäß der Einsatz eines bekannten Elektronenstrahlverfahrens vorgesehen. Die zumindest abschnittsweise durchgängig versprödeten Stege 10 sind besonders rißanfällig, was vorteilhafterweise zur Ausbildung haarfeiner Starterrisse genutzt wird. Diese erfordem beim Bruchtrennen einen reduzierten Kraftaufwand und ergeben trotzdem eine hohe Bruchtrennflächen-Qualität.

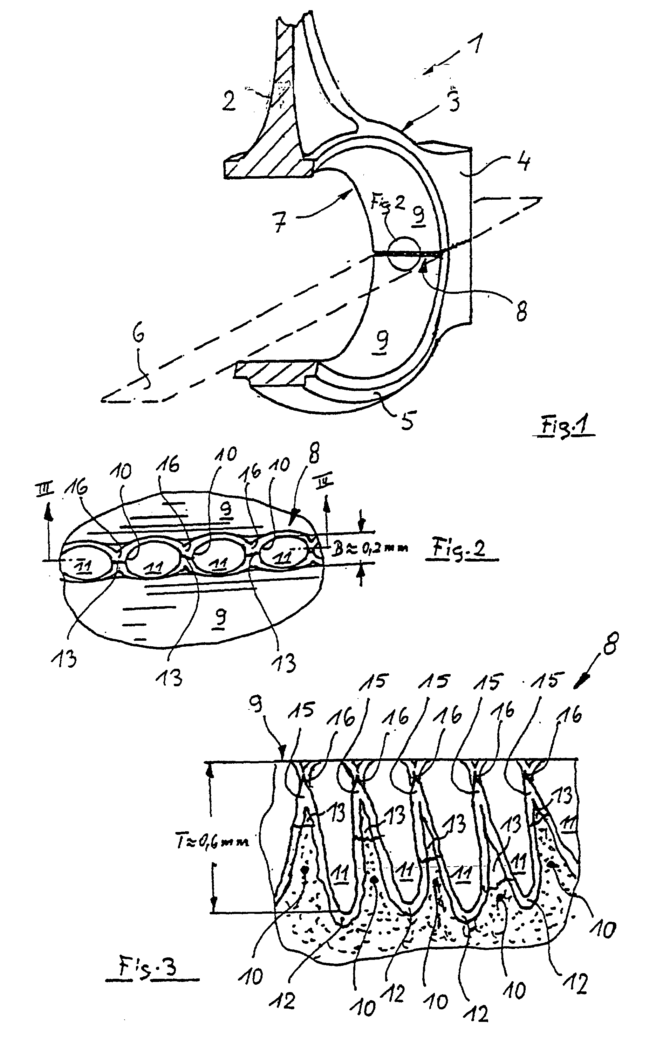

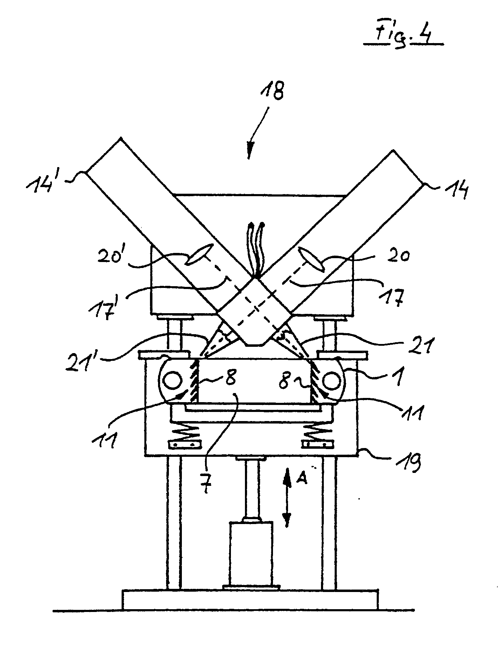

Ausgehend von bekannten Maßnahmen, nach denen die Vertiefungen 11 mittels Aufschmelzen/Verdampfen des Bauteil-Werkstoffes durch Strahlenergie erzeugt werden und die Begrenzungen der Vertiefungen 11 durch das Aufschmelzen erzeugte Gefüge-Umwandlungen 12 aufweisen, sind günstige Voraussetzungen für haarfeine Starterrisse in einem Stahl-Pleuel 1 dadurch erreicht, daß die Strahlenergie mittels eines Lasers 14, 14' derart eingebracht und das erschmolzene Material mittels eines Luft- oder Sauerstoffstrahles ausgeblasen und/oder verbrannt bzw. verdampft wird, daß zumindest in den freien, bauteiloberflächennahen Endabschnitten der Stege 10 unter einem spitzen Winkel sich überlappende, versprödete Zonen 15 von Gefügeumwandlungen 12 zur Auslösung erster Starterrisse 13 erzeugt werden, wobei der Luft- oder Sauerstoffstrahl zusätzlich einer gegenüber der Bauteiloberfläche 9 vertieften Ausbildung der Stege 10 dient. Die im Anschluß an das Ausblasen des erschmolzenen Materials erfolgende Eigenabschreckung ergibt in den trichterförmigen Vertiefungen 11 - Figuren 2 und 3 - allseitig gebildete, d.h. umfänglich geschlossene, im Gefüge zu Martensit umgewandelte Härteschichten 12, die die Stege 10 zumindest in den kleinsten Querschnitten im Bereich ihrer Spitzen 16 durchsetzen und somit zumindest diese Querschnitte durchgängig versprödet sind.

Sich überlappende Zonen 15 von Gefügeumwandlungen 12 sind besonders vorteilhaft einfach dadurch erreicht, daß die Vertiefungen 11 trichterförmig ausgebildet werden mittels einer Lasereinrichtung 14, 14' mit einer über den Querschnitt des gepulsten Laserstrahles 17, 17' nach Gauß'scher Verteilungskurve verteilter Strahlenergie.

Für das vorbeschreibene Pleuel 1 ist zur Erzielung einer prozeßsicheren Härtung der Stege für eine schnelle und gleichmäßige Brucheinleitung ein niedrig legierter Kohlenstoffstahl aufzuzeigen, dessen Streckgrenze relativ zur Bruchgrenze derart erhöht ist, daß eine mit dem Bruchtrennen des Lagerdeckels 5 gegebene plastische Verformung des Lagerauges 3 stets im gleichen Umfang gering und damit prozeßsicher ist.

Hierfür wird erfindungsgemäß vorgeschlagen, daß der Kohlenstoffstahl neben Kohlenstoff C = 0,60 bis 0,78 % und Schwefel S = 0,06 bis 0,07 % als wesentliche Legierungsbestandteile Mangan Mn = 0,55 bis 1,0 %, Vanadium V = 0,03 bis 0,20 %, Chrom Cr = 0,10 bis 0,30 % und Stickstoff N = 0,01 bis 0,025 % umfaßt und die Verunreinigungen bzw. Stahlbegleiter wie Silicium Si, Kupfer Cu, Bor B und Phosphor P insgesamt maximal 0,6 % betragen, wobei das geschmiedete Pleuel 1 durch eine vorbestimmte Abkühlung aus der Schmiedewärme mittels bzw. an der Luft bis unter 600°C ein Gefüge mit 90 bis 95 % Perlit und 10 bis 5 % Ferrit aufweist.

Bevorzugt findet zur Ausbildung der trichterförmigen Vertiefungen 11 der Anrißstelle 8 ein gepulster Festkörper-Laser Verwendung, womit in Verbindung mit kleinsten Abmessungen der Vertiefungen 11 von jeweils einer Breite B ≈ 0,2 mm und einer Tiefe T ≈ 0,6 mm ein derart kleiner, lokal begrenzter Wärmeeintrag in das Pleuel 1 mit gesteuert erzeugten Härteschichten 12 erfolgt, daß das Bauteil bzw. das Pleuel 1 bis auf ein Übermaß für die Feinstbearbeitung der Lagerbohrung 7 bereits fertiggestellt sein kann. Hierzu trägt auch ferner bei, daß die aus der Verschneidung benachbarter, trichterförmiger Vertiefung 11 erzeugten, versprödeten Steg-Spitzen 16 gegenüber der Bauteil-Oberfläche 9 in ihren jeweiligen vertieften Abstand belassen werden. Mit den unterschiedlich nah an die Bauteiloberfläche 9 heranreichenden Steg-Spitzen 16 ergibt sich der weitere Vorteil, daß die besonders hohen Steg-Spitzen 16 aufgrund ihrer durchgängigen Versprödung wegen des raschen Wärmeentzuges über das angrenzende Pleuelmaterial besonders kerbempfindlich sind bzw. leicht zu Härterissen neigen und somit bei einer Bruchbelastung als erste brechen und in der Folge die niedrigeren, versprödeten Steg-Spitzen 16 zur raschen Rißbildung veranlassen.

Aufgrund der vorbeschriebenen, in Umfangsrichtung der Lagerbohrung 7 geringen Breite von ca. 0,2 mm jeder Anrißstelle 8 können diese bei Einsatz eines Wälzlagers oder von Lagerschalen (jeweils nicht gezeigt) in der Lagerbohrung 7 verbleiben, womit eine spanabhebende Bearbeitung zur Beseitigung der jeweiligen Anrißstelle 8 vorteilhaft entfällt.

Es sei darauf hingewiesen, daß es nicht auf eine hohe Anzahl von Vertiefungen 11 je Anrißstelle 8 ankommt, sondern in einer je Anrißstelle 8 ausreichenden Anzahl gehärteter bzw. zumindest abschnittsweise versprödeter Stege 10 als Starterriß-Bildner. Die Anzahl der Stege 10 je Anrißstelle 8 bestimmt sich damit auch durch im Querschnitt länglich gestaltete Vertiefungen 11. Gegenüber einer herkömmlich durchgehenden Kerbtrennlinie (= US 5 208 979) oder einer Vielzahl von Kerbabschnitten (= DE-U 295 19 126) ergibt sich demgegenüber eine Anzahl kurzer, aus querschnittsschwachen, versprödeten Stegen gebildeter Linienabschnitte, deren Länge in Summe gegenüber der oben genannten Kerbtrennlinie bzw. den Kerbabschnitten wesentlich kürzer und bruchempfindlicher ist, so daß die eingeleitete Bruchtrennkraft sich auf viele durch Versprödung rißanfällige Stege verteilt mit dem Vorteil der gezielten Auslösung vieler Starterrisse.

Aufgrund der bevorzugt lasergebildeten Vertiefungen 11 mit allseitigen Härteschichten 12 setzen sich die Starterrisse 13 bis in den Grund der jeweiligen Vertiefungen 11 fort, so daß zu Anfang des Bruchtrennens über die gesamte Länge der Anrißstelle 8 verteilt Starterrisse 13 auftreten, die beim Fortgang durch die Stege 10 bis in den jeweiligen Grund zwischen den Vertiefungen 11 sich zu einer gemeinsamen Rißfront im weiteren Fortgang des Bruchtrennens vereinigen. Mit den über die gesamte Länge der Anrißstelle 8 erzeugten, vielen Starterrissen 13 ist in vorteilhafter Weise ein vergleichmäßigtes Bruchtrennen in jedem Bauteilquerschnitt mit hochwertigen Bruchtrennflächen erzielt.

Figur 4 zeigt eine unmaßstäblich dargestellte Vorrichtung 18, die zur gleichzeitigen Fertigung beider Anrißstellen 8 in dem Lagerauge 3 des Pleuels 1 zwei Lasereinrichtungen 14, 14' umfaßt mit sich kreuzenden, vorzugsweise durchdringend kreuzenden Laserstrahlen 17, 17'. Weiter ist die Vorrichtung 18 mit einer Aufnahme 19 zur Positionierung des Pleuels 1 ausgerüstet. Zur Schonung der empfindlichen Laseroptiken 20, 20' sind die Lasereinrichtungen 14, 14' in der Vorrichtung 18 fest angeordnet und die Aufnahme 19 relativ zu den Lasereinrichtungen 14, 14' zur Erzielung einer vorbestimmten Vorschubbewegung gemäß Pfeil A motorisch verstellbar ausgebildet.

Die Figur 4 zeigt weiter, daß die Laserstrahlen 17, 17' durch Mündungen von Düsen 21, 21' austreten, die der Zufuhr von Luft oder Sauerstoff zum Ausblasen des erschmolzenen Werkstoffes aus der jeweiligen Vertiefung 11 dienen.

Anstelle zweier Lasereinrichtungen 14, 14' kann auch eine einzige Lasereinrichtung mit einem Strahlteiler vorgesehen sein. Weiter können die Vertiefungen 11 von beliebigem Querschnitt sein, wofür Laserstrahlen mit entsprechendem Strahlquerschnitt (z.B. Rechteckquerschnitt) zum Einsatz kommen.

Als weitere Vorteile ergeben sich damit eine höhere Fertigungsgeschwindigkeit bei noch genauerer Lage der Anrißstellen 8 sowie eine vereinfachte Aufnahme 19 durch den Fortfall eines Werkstückumschlages. Auch ein Laserschwenken erübrigt sich mit der vorgeschlagenen Vorrichtung 18. Wie Versuche zudem zeigten, ergeben in den diametralen Anrißstellen 8 zueinander V-förmig angeordnete Vertiefungen 11 in überraschender Weise eine weitere Reduzierung der Bruchtrennkraft und damit eine geringere Bauteilverformung.

Mit den Anrißstellen 8 mit zumindest bereichsweise glashart versprödeten Stegen 10 ergibt sich bei deren üblicher, nicht V-förmiger Anordnung bereits in vorteilhafter Weise gegenüber den herkömmlichen Bruchtrennkerben eine erhebliche Reduzierung der Bruchtrennkraft um mindestens 50 %. Dies läßt sich für die Fertigung eines Stahl-Pleuels 1 mit V-förmiger Steg-Anordnung (Figur 4) dahingehend nutzen, daß dieses bis auf die letzte Feinstbearbeitung der Lagerbohrung 7 gefertigt ist, einschließlich mindestens einer Haltenut für Lagerschalen. Zusätzlich kann der Lagerdeckel 5 zwischen den Schraubenpfeifen 4 derart biegeelastisch gestaltet sein, daß mit einem um 0,05 bis 0,15 mm im Durchmesser gegenüber der vorbearbeiteten Lagerbohrung 7 kleiner gewählten, nicht gezeigten Brechdorn eine der Erzeugung von Starterrissen 13 in den Stegen 10 und den Vertiefungen 11 dienende elastische Verformung bewirkt wird. Eine eventuell aus diesem Bruchtrennen bleibende Oval-Verformung liegt innerhalb des für die Feinstbearbeitung vorgesehenen Aufmaßes.

Die mit dem erfindungsgemäßen Kohlenstoffstahl vorteilhaft erzielte geringere Plastizität ist belegt durch eine entsprechende Brinell-Härte mit Werten von 260 bis 310 HB30. Die Prozentangaben der Legierungsbestandteile des beanspruchten Stahls verstehen sich in Gewichts-Prozenten.

## Patentansprüche

1. Geschmiedetes Pleuel für Hubkolbenmaschinen aus Kohlenstoffstahl mit bruchgetrenntem Lagerdeckel,
- bei dem zur gezielten Bruchauslösung am großen Lagerauge (3) für den Lagerdeckel (5) eine Anrißstelle (8) erzeugt ist durch zumindest abschnittsweise entlang einer Seite der Bruchtrennebene (6) von der Bauteiloberfläche (9) aus mittels eines energiereichen Strahles, wie eines Elektronen- oder Laserstrahls (17, 17') angeordneter und mittels querschnittsschwacher Stege (10) voneinander getrennter, insbesondere sacklochartiger Vertiefungen (11), wobei
- diese Stege (10) zumindest in ihren freien, bauteiloberflächennahen Endabschnitten (Zonen 15) mittels temperaturabhängiger Gefügeumwandlungen zu Martensit über ihren Querschnitt durchgängig versprödet sind zur Erzeugung insbesondere von Härterissen als erste Starterrisse (13) zur Bruchauslösung,
**dadurch gekennzeichnet, daß** der Kohlenstoffstahl
- ein niedrig legierter Kohlenstoffstahl ist, der neben Eisen Fe und Verunreinigungen wie Silicium Si, Kupfer Cu, Bor B und Phosphor P von insgesamt 0,6 Gew.-%
- aus Kohlenstoff C = 0,60 bis 0,78 Gew.-%, Schwefel S = 0,06 bis 0,07 Gew.-% sowie Chrom Cr = 0,10 bis 0,30 Gew.-% und insbesondere
- zur gesteigerten Martensit-Gefügeausbildung in den Stegspitzen (Zonen 15) sowie in den anschließenden Härteschichten (12) der Vertiefungen (11) aus Magan Mn = 0,55 - 1,0 Gew.-% und ferner
- zur weiteren Steigerung der Streckgrenze des Kohlenstoffstahles einerseits und zur Reduzierung einer Rißverzweigung beim Bruchtrennen mittels freier Ferrit-Anteile im Gefüge der Stege (10) andererseits aus den weiteren Legierungsbestandteilen Vanadium V = 0,03 - 0,20 Gew.-% und Stickstoff N = 0,01 - 0,025 Gew.-% besteht, wobei
- das vor der Anordnung der Anrißstellen (8) geschmiedete Pleuel (1) durch eine vorbestimmte Abkühlung aus der Schmiedewärme mittels/an der Luft bis unter 600°C ein Gefüge mit 90 bis 95 Gew.-% Perlit und 10 bis 5 Gew.-% Ferrit aufweist.

2. Pleuel nach Anspruch 1, **dadurch gekennzeichnet,**
- **daß** die sacklochartigen Vertiefungen (11) mittels des energiereichen Strahles (17, 17') durch Schmelzen, Ausblasen und Verdampfen des Stahls gebildet sind, wobei
- - die Härtung der Stege (10) durch Martensitbildung mittels Wärmeentzug aus den Stegen (10) über das angrenzende Pleuelmaterial bewirkt ist.

3. Pleuel nach Anspruch 1 und 2, **dadurch gekennzeichnet,**
- **daß** die sacklochartigen Vertiefungen (11) jeweils mittels eines energiereichen Strahles trichterförmig gestaltet sind und ferner die Energie des Strahles jeweils derart bemessen ist, daß
- die sacklochartigen, trichterförmigen Vertiefungen (11) im wesentlichen umfänglich geschlossene, mittels Eigenabschreckung im Gefüge zu Martensit umgewandelte Härteschichten (12) aufweisen, wobei
- sich überlappende Härteschichten (12) benachbarter Vertiefungen (11) zumindest in bauteiloberflächennahen Endbereichen der Stege (10) über den jeweiligen Stegquerschnitt durchgängig versprödete Zonen (15) bilden.

## Claims

1. A forged connecting rod for reciprocating engines and made of carbon steel with a bearing cover separated by breaking,
- wherein a starting crack (8) for controlled initiation of the break on the large eyelet (3) for the bearing cover (5) is produced by recesses (11), especially in the form of blind bores separated from one another by narrow webs (10), disposed along at least parts of one side of the fracture plane (6) of the component surface (9) and formed by a high-energy beam such as an electron or laser beam (17, 17'), wherein
- the webs (10) at least at their free end portions (zones 15) near the surface of the component are embrittled throughout over their cross-section by temperature-dependent structural alterations to martensite in order especially to produce hardness cracks (13) for initiating the break,
**characterised in that**
- the carbon steel is a low-alloy carbon steel which contains iron Fe, impurities such as silicon Si, copper Cu, boron B and phosphorus P totalling 0.6 wt.%,
- carbon C = 0.60 to 0.78 wt.%, sulphur S = 0.06 to 0.07 wt.% and chromium Cr = 0.10 to 0.30% and in particular
- to increase the formation of martensite structure in the web peaks (zones 15) and in the adjoining hardened cases (12) of the recesses (11) also comprises manganese Mn = 0.55 - 1.0 wt.% and
- in order further on the one hand to increase the elastic limit of the carbon steel and on the other hand to reduce the branching of cracks during breaking due to ferrite components in the structure of the webs (10), also comprises the alloy constituents vanadium V = 0.03 - 0.20 wt.% and nitrogen N = 0.01 - 0.025 wt.%, wherein
- the connecting rod (1), which is forged before the incipient cracks (8) are produced, is given a structure containing 90 to 95 wt.% perlite and 10 to 5 wt.% ferrite by predetermined cooling from the forging heat by air below 600°C.

2. A connecting rod according to claim 1, **characterised in that**,
- the blind bore recesses (11) are formed by means of energy-rich radiation from melting, purging and evaporation of the steel, wherein
- the hardening of the webs (10) is effected by open hearth martensitic formation by means of heat extraction from the webs (10) via the bordering connecting rod material.

3. A connecting rod according to claim 1 and claim 2, **characterised in that**,
- the blind bore recesses (11) are individually formed by an energy-rich radiation in funnel shapes, and further that the energy of the radiation is always so dimensioned that
- the blind bore funnel-shaped recesses (11) have essentially circumferentially closed hardened layers (12) converted in structure to martensite by means of self quenching, wherein
- overlapping hardened layers (12) of adjacent recesses (11) form, at least in the end regions of the webs (10) close to the surface of the components embrittlement zones (15) throughout the individual cross-section of the web.

## Revendications

1. Bielle forgée pour un moteur à pistons linéaires, en acier au carbone comportant un chapeau de palier séparé par rupture,
et qui, pour un déclenchement précis de la rupture au niveau du grand oeillet de palier (3) comporte une zone de rupture (8) pour le chapeau de palier (5), avec des cavités (11) notamment en forme de trou borgne réalisées au moins par segments le long d'un côté du plan de séparation par rupture (6) à partir de la surface (9) de la pièce à l'aide d'un faisceau très énergétique tel qu'un faisceau d'électrons ou un faisceau laser 17, 17', et qui sont séparées par des entretoises (10) de section affaiblie,
- ces entretoises (10) étant rendues cassantes au moins dans leur section, au niveau de leurs segments d'extrémité (zone 15), libres, proches de la surface de la pièce, par des transformations du réseau en fonction de la température, pour donner de la martensite, et générer des premières fissures de démarrage (13) notamment des fissures de traitement thermique pour déclencher la rupture,
**caractérisée en ce que**
- l'acier au carbone est un acier faiblement allié qui, à côté de fer (Fe) et d'impuretés telles que le silicium (Si), le cuivre (Cu), le bore (B) ou le phosphore (P) représentant en tout 0,6 % en poids, contient du carbone C = 0,60 à 0,78 % en poids, du souffre S = 0,06-0,07 % en poids, du chrome Cr = 0,10-0,30 % en poids et en particulier pour augmenter la formation du réseau de martensite dans les pointes d'entretoises (zones 15) et dans les couches de traitement thermique (12) adjacentes des cavités (11) avec manganèse Mn = 0,55-1,0 % en poids, et
- pour d'une part augmenter encore plus la limite d'allongement de l'acier au carbone et d'autre part réduire toute dérivation de fissure lors de la séparation par fissure par une teneur libre en ferrite dans le réseau des entretoises (10), l'acier contient d'autres composants d'alliage, le vanadium V = 0,03-0,20 % et l'azote N = 0,01-0,025 % en poids,
- la bielle (1) forgée avant de réaliser les points d'amorce de rupture (8) présente du fait d'un refroidissement prédéterminé à partir de la température de forgeage par ou dans de l'air jusqu'à une température de 600°C, un réseau ayant entre 90 et 95 % en poids de perlite et entre 10 et 5 % en poids de ferrite.

2. Bielle selon la revendication 1,
**caractérisée en ce que**
- les cavités (11) en forme de trous borgnes sont réalisées à l'aide d'un faisceau (17, 17'), riche en énergie, par fusion, soufflage et vaporisation de l'acier,
- le traitement thermique des entretoises (10) par formation de martensite par prélèvement de chaleur des entretoises (10) se fait par la matière adjacente de la bielle.

3. Bielle selon l'une quelconque des revendications 1 ou 2,
**caractérisée en ce que**
- les cavités (11) en forme de trous borgnes ont une forme d'entonnoir réalisé par un faisceau riche en énergie et en outre ce faisceau riche en énergie est dimensionné pour que
- les cavités (11) en forme de trous borgnes en entonnoir présentent des couches de traitement thermiques (12) fermées de manière périphérique, transformées en martensite par trempe propre du réseau et
- les couches de traitement thermiques (12) de cavités voisines (11) qui se chevauchent, forment au moins dans les zones d'extrémité des entretoises (10), proches de la surface de la pièce, des zones cassantes (15) traversant la section de l'entretoise respective.
